# EUROPÄISCHE PATENTSCHRIFT

(11) **EP 1 532 422 B1**
(45) Veröffentlichungstag und Bekanntmachung des Hinweises auf die Patenterteilung: **02.01.2008**
(21) Anmeldenummer: 03794954.2
(22) Anmeldetag: 28.08.2003
(51) Int. Cl.: G01B 21/04, G01B 5/008, B23Q 17/20

(54) **TASTEINRICHTUNG FÜR VIELFÄLTIGE MESSAUFGABEN**
SENSOR DEVICE FOR MULTIPLE MEASURING TASKS
SYSTEME PALPEUR POUR OPERATIONS DE MESURE MULTIPLES

(30) Priorität: 31.08.2002 DE 10240292
(43) Veröffentlichungstag der Anmeldung: 25.05.2005
(73) Patentinhaber: CARL MAHR HOLDING GMBH, 37073 Göttingen (DE)
(72) Erfinder: ZIEGENBEIN, Rainer, 37124 Rosdorf (DE)
(74) Vertreter: Rüger, Barthelt & Abel Patentanwälte
(86) Internationale Anmeldenummer: PCT/EP2003/009509
(87) Internationale Veröffentlichungsnummer: WO 2004/025222

(56) Entgegenhaltungen:
- DE-A- 3 806 686
- DE-A- 19 811 460
- US-A- 3 750 295
- US-A- 3 869 799
- US-A- 5 822 877

## Beschreibung

Die Erfindung betrifft eine Tasteinrichtung, die beispielsweise zur Formmessung von Werkstücken einsetzbar ist.

Es sind Messmaschinen bekannt, die ein Werkstück unter Zuhilfenahme von mechanischen Tastern und/oder optischen Tastern abtasten. Beispielsweise offenbart die DE 38 06 686 C1 eine Koordinatenmess- und Prüfeinrichtung, die ein Werkstück sowohl taktil als auch optisch vermessen kann. Dazu weist die Messeinrichtung einen Tisch zum Lagern des Werkstücks auf, oberhalb dessen an einem Träger unabhängig voneinander verfahrbar ein mechanischer Taster mit einem Taststift und ein optischer Taster angeordnet sind. Der optische Taster enthält ein Objektiv durch das eine Kamera die Werkstückoberfläche beobachten kann. Außerdem wird ein Laserstrahl durch das gleiche Objektiv auf das Werkstück gerichtet und das reflektierte Licht wieder aufgenommen. Damit kann das Werkstück optisch punktuell erfasst werden, während die Kamera das Werkstück flächenhaft erfasst.

Bei dieser Messeinrichtung handelt es sich um eine spezielle Messmaschine, an der zwei voneinander unabhängige Taster (optischer Taster und mechanischer Taster) betrieben werden.

Aus der DE 198 11 460 C2 ist außerdem eine Formmesseinrichtung bekannt, die einen optischen Liniensensor enthält, der interferenzoptisch arbeitet. Der Liniensensor ist zur Inspektion von Oberflächen mit vorgegebenem Profil geeignet. Er überprüft, inwieweit das tatsächliche Profil mit einem vorgegebenen Profil übereinstimmt. Der Liniensensor enthält eine Lichtquelle für kohärentes Licht, das durch einen Strahlteiler in einen Referenzlichtstrahl und einen Messstrahl aufgeteilt wird. Der Messstrahl wird von der Werkstückoberfläche reflektiert und mit dem Referenzlichtstrahl zur Überlagerung gebracht. Aus dem Überlagerungsbild wird auf die Qualität der Oberfläche geschlossen.

Ein solcher Liniensensor ist sehr gut für Serienmessungen geeignet. Er stößt jedoch an Grenzen, wenn unbekannte Oberflächen zu vermessen sind.

Die US-A-3750295 offenbart eine Messmaschine mit einem in Vertikal- und Horizontalrichtung verfahrbaren Träger, der zwei vertikal bewegliche Pinolen trägt. Jede Pinole ist mit einem eigenen Messkopf versehen, der einen mechanischen Taster trägt. Die Taster weisen jeweils Taststifte auf, die in unterschiedlichen Raumrichtungen orientiert sein können.

Des Weiteren offenbart die US-A-5822877 eine Messeinrichtung mit einem Tasterträger, der dreiachsig im Raum bewegbar ist. Der Tasterträger hält mehrere Tastköpfe, die in einer ersten Version an dem Tasterträger starr befestigt sind. In einer zweiten Version sind sie mit Stelleinrichtungen verbunden, wodurch sie auf zueinander parallelen Achsen gegeneinander verschiebbar sind. Damit lassen sich die an den Tastern vorhandenen Taststifte auf ein erwartetes Werkstückprofil einstellen.

Es ist Aufgabe der Erfindung, eine Messeinrichtung zu schaffen, die für vielfältige Messaufgaben einsetzbar ist.

Diese Aufgabe wird mit dem Kombitaster nach Anspruch 1 gelöst.

Der erfindungsgemäße Kombitaster bildet einen Tastkopf, der an einer Messmaschine oder an einer anderweitigen Messeinrichtung eingesetzt werden kann, ohne dass an der Messmaschine selbst dazu besondere bauliche Vorkehrungen oder Veränderungen erforderlich wären. Der Kombitaster ermöglicht mehrere Tastbetriebsarten, die unterschiedlichen Einsatzfällen zugehörig sind. Im Einzelnen weist der Kombitaster dazu einen Tasterträger auf, der beispielsweise mit einer Koordinätenmessmaschine zu verbinden ist und von der Koordinatenmessmaschine im Raum bewegt wird, um das Werkstück anzutasten oder in eine zur Antastung geeignete Position zu bringen.

Der Kombitaster gestattet nun wenigstens zwei unterschiedliche Tastbetriebsarten. Dazu ist der Tasterträger mit zwei Tasteinrichtungen versehen, die die unterschiedlichen Tastbetriebsarten ermöglichen. Die Tastbetriebsarten unterscheiden sich durch die Art der Antastung (punktuell und/oder kontinuierlich zur Formmessung, kontinuierlich zur Rauheitsmessung), die Art der Messwertgewinnung (einachsig, mehrachsig) oder das Tastprinzip (taktil, nicht taktil). Beispielsweise kann sowohl die erste als auch die zweite Tastbetriebsart jeweils eine taktile dabei aber ansonsten unterschiedliche Betriebsart sein. In anderen Ausführungsformen ist die erste Tastbetriebsart beispielsweise taktil, während die zweite Tastbetriebsart berührungslos ist. In der zweiten Tastbetriebsart sind sowohl punktuelle als auch linienhafte als auch flächenhafte Abtastungen möglich, beispielsweise indem Punktsensoren, Liniensensoren oder Flächensensoren eingesetzt werden.

Die beiden Tasteinrichtungen sind an dem gemeinsamen Tasterträger vorzugsweise in unterschiedlichen, sich radial von der Drehachse weg erstreckenden Orientierungen angeordnet, so dass sie durch Drehung des Tasterträgers jeweils in Arbeitsposition überführt werden können. Der Tasterträger wird durch die Krafterzeugungseinrichtung um die Drehachse geschwenkt. In diesem Sinne dient die Krafterzeugungseinrichtung als Positionierungseinrichtung für die einzelnen Tasteinrichtungen. Der Schwenkbereich der Positioniereinrichtung ist dabei so groß, dass beide Tasteinrichtungen wahlweise in ein und dieselbe Betriebsposition überführbar sind, die nahe an dem Werkstück angeordnet ist. Die zugeordneten Ruhepositionen liegen entsprechend fern von dem Werkstück. Außerdem dient die Krafterzeugungseinrichtung zur Erzeugung der Messkraft mit der der Tastkörper einer mechanischen Tasteinrichtung an der Werkstückoberfläche anliegt. Es handelt sich vorzugsweise um eine gesteuerte, elektrische, magnetische oder elektro-dynamische Krafterzeugungseinrichtung, wie beispielsweise einen geeigneten Motor. Dieser dient auch dazu, den Tasterträger in vorgegebene Winkelpositionen zu überführen und zu halten, um etwaige nicht berührende Tastbetriebsarten auszuführen.

Die Krafterzeugungs- und Positioniereinrichtung kann alternativ durch eine elektrische Positioniereinrichtung gebildet sein, an deren Abtrieb ein Federmechanismus angeschlossen ist, der seinerseits den Tasterträger mit Kraft beaufschlagt. Der Federmechanismus kann so ausgebildet sein, dass er eine stabile Ruhelage festlegt, die in beiden Drehrichtungen nur unter Überwindung relativ großer Haltekräfte zu verlassen ist. Ist die Ruhelage jedoch einmal verlassen, überträgt der Federmechanismus lediglich noch eine relativ niedrige, mehr oder wenige konstante Kraft (Drehmoment), die als Tastkraft dienen kann. Ein solcher Federmechanismus gestattet einerseits, das mechanische, punktuelle Antasten von Messpunkten auf herkömmliche Weise. Dabei wird der Tastkopf im Ganzen jeweils so an das Werkstück herangefahren, dass der Tastkörper die Werkstückoberfläche berührt und aus seiner Ruhelage ausgelenkt wird. Andererseits kann ein solcher Tastkopf beispielsweise im berührungslosen Tastbetrieb genutzt werden. Hier stellt der Federmechanismus die von dem Antrieb vorgegebene Position jeweils sicher ein und hält somit die entsprechenden Sensoren sicher.

Die an dem Tasterträger angeordneten Tasteinrichtungen können auch miteinander vereinigt sein. Beispielsweise kann ein Taststift sowohl einen Tastkörper zur mechanischen Antastung von Messpunkten als auch einen weiteren Sensor tragen, der beispielsweise nicht berührend arbeitet.

Bei einer oben genannten Variante des Kombitasters arbeiten beide Tasteinrichtungen nach dem taktilen Prinzip. Durch entsprechend unterschiedliche Ausbildung der Tastkörper an den Enden der Taststifte können die Tasteinrichtungen unterschiedliche Tastaufgaben lösen und somit in unterschiedlichen Tastbetriebsarten arbeiten. Beispielsweise kann eine Tasteinrichtung als Rauheitstaster mit eigenem Messsystem ausgebildet sein, während der andere zur Aufnahme von Messpunkten dient. Auch ist es möglich, eine Tasteinrichtung zur linienhaften Abtastung von Oberflächen auszubilden während die andere dazu dient, Löcher, Bohrungen oder sonstige Vertiefungen in dem Werkstück zu erfassen. Es wird dabei bevorzugt, wenigstens eine der beiden Tasteinrichtungen mit einem beweglich an dem Tasterträger gelagerten Taststift auszubilden, so dass zusätzlich zu der kontrollierten Schwenkbewegung des Taststifts eine Axialbewegung desselben zugelassen und erfasst werden kann. Auch dies ermöglicht unterschiedliche Tastbetriebsarten.

Weitere Einzelheiten vorteilhafter Ausführungsformen der Erfindung ergeben sich aus der nachfolgenden Beschreibung, der Zeichnung sowie aus Unteransprüchen.

In der Zeichnung sind nicht beanspruchte Beispiele und Ausführungsbeispiele der Erfindung veranschaulicht. Es zeigen:
- Figur 1: einen Kombitaster mit zwei mechanischen Taststiften in schematisierter, perspektivischer Prinzipdarstellung (nicht beanspruchtes Beispiel),
- Figur 2: den Kombitaster nach Figur 1 in einer ausschnittsweisen Darstellung,
- Figur 3: eine Tasteinrichtung des Kombitasters nach Figur 1 und 2 in längs geschnittener Darstellung,
- Figur 4: einen Tasterträger mit unterschiedlichen, daran befestigten Tasteinrichtungen für verschiedene Tastbetriebsarten einschließlich eines optischen Tasters in schematisierter Darstellung,
- Figur 5: den optischen Taster des Tasterträgers nach Figur 4 in schematisierter Funktionsdarstellung,
- Figur 6: eine abgewandelte Ausführungsform einer optischen Linientasteinrichtung in Prinzipdarstellung,
- Figur 7: eine abgewandelte Ausführungsform eines Tasterträgers mit einem optischen Flächentaster,
- Figur 8: eine Atomic-Force-Tasteinrichtung mit mehreren Atomic-Force-Sensoren in prinzipieller Seitenansicht und
- Figur 9: einen Atomic-Force-Sensor in schematisierter Darstellung.

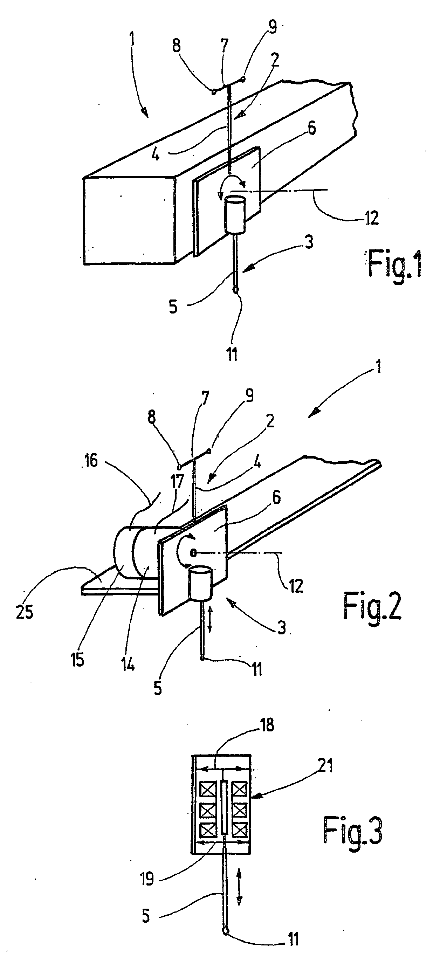

In Figur 1 ist eine Kombitaster 1 veranschaulicht, der zwei alternativ zu benutzende mechanische, d.h. taktile Tasteinrichtungen 2, 3 aufweist. Diese enthalten jeweils einen Taststift 4, 5, der mittelbar oder unmittelbar an einem Tasterträger 6 gehalten ist. Der Taststift 4 trägt endseitig ein Querstück 7, das mit zwei Tastkugeln 8, 9 versehen ist, die als Tastkörper dienen. Der Taststift 5 trägt an seinem freien Ende hingegen lediglich eine Tastkugel 11. Die Taststifte 4, 5 an einander diametral gegenüber liegenden Seiten des Tasterträgers 6 im Winkel von 180° bezüglich einer Drehachse 12 angeordnet, um die der Tasterträger 6 drehbar gelagert ist. Dies ist im Einzelnen aus Figur 2 ersichtlich. Ein elektro-dynamischer Antrieb 14, mit dessen Abtrieb der Tasterträger 6 verbunden ist, enthält zugleich eine Lagereinrichtung, um den Tasterträger 6 präzise um die Drehachse 12 drehbar zu lagern. Der Antrieb 14 gestattet eine Drehung des Tasterträgers 6 um zumindest 180°, vorzugsweise mehr. Er dient zur Drehpositionierung des Tasterträgers 6 und zur Erzeugung einer Antastkraft, wie weiter unten erläutert ist.

Der Antrieb 14 ist mit einer Sensoreinrichtung 15 beispielsweise in Form eines induktiven Winkelgebers verbunden. Dieser gibt an einem Ausgang 16 ein der Winkelposition des Tasterträgers 6 entsprechendes elektrisches Signal ab. Hingegen erhält der Antrieb 14 an einem Eingang 17 ein elektrisches Signal, das ein auf dem Tasterträger 6 einwirkendes positives oder negatives Drehmoment hervorruft. Der Taststift 4 der Tasteinrichtung 2 ist an dem Tasterträger 6 vorzugsweise starr gelagert. Die Tasteinrichtung 2 ist somit einachsig, denn der Taststift 4 kann nur um die Drehachse 12 schwenken. In einem nicht beanspruchten Beispiel ist auch der Taststift 5 starr mit dem Tasterträger 6 verbunden, so dass auch die Tasteinrichtung 3 einachsig ausgebildet ist.

Der insoweit beschriebene Kombitaster 1 arbeitet wie folgt:

Zur Lösung einer Tastaufgabe wird der Kombitaster 1 in die Nähe des Werkstücks gefahren. Es wird dann der Antrieb 14 so angesteuert, dass der Tasterträger 6 langsam rotiert. Sobald die Tastkugel 11 an der Werkstückoberfläche anstößt blockiert sie die weitere Drehung des Tasterträgers 6. Die Signale der Sensoreinrichtung 15 kennzeichnen nun die Dreh- oder Schwenkposition des Taststifts 5 während der Antrieb 14 die Antastkraft, mit der die Tastkugel 11 an dem Werkstück anliegt, erzeugt.

Im Weiteren Abtasten des Werkstücks kann nun der Kombitaster 1 verfahren werden, wobei die Tastkugel 11 an der Oberfläche entlang gleitet. Die Sensoreinrichtung 15 gibt dabei die jeweils aktuelle Winkelposition aus, so dass ein (lückenloses) Oberflächenlinienprofil erstellt werden kann.

In einer Alternative wird der Antrieb 14 so angesteuert, dass die Tastkugel 11 von der Werkstückoberfläche abhebt bevor der Kombitaster im Ganzen um eine gewünschte Schrittweite weiter bewegt wird. In seiner neuen Position angekommen, wird die Tastkugel 11 dann durch Ansteuerung des Antriebs 14 erneut an die Werkstückoberfläche angelegt, um den nächsten Messpunkt aufzunehmen.

Die Funktion der Tasteinrichtung 2 ist entsprechend. Jedoch lassen sich mit der Tasteinrichtung 2 Messpunkte aufnehmen, die mit der Tasteinrichtung 3 nicht erreichbar sind, beispielsweise weil sie hinter Vorsprüngen oder dergleichen liegen.

Der Wechsel der Werkstückabtastung mittels der Tasteinrichtung 2 und der Tasteinrichtung 3 erfolgt, indem der Antrieb 14 so angesteuert wird, dass sich der Tasterträger 6 um etwa 180° dreht. Es wird dadurch die eine Tasteinrichtung (2) in Arbeitsposition überführt, während die jeweils andere Tasteinrichtung (3) in Ruheposition überführt wird. Die Tasteinrichtungen 2, 3 können für ganz unterschiedliche Messaufgaben und für unterschiedliche Tastbetriebsarten ausgelegt sein. Beispielsweise kann ein Tastkörper zum punktweisen Antasten des Werkstücks eingerichtet sein, während der andere zum linienweisen Abtasten der Oberfläche eingerichtet ist. Beispielsweise ist ein Tastkörper eine Tastkugel während der andere eine Tastspitze ist.

Bei der vorstehend beschriebenen Ausführungsform und bei allen nachstehend beschriebenen Ausführungsformen kann der Antrieb des Tasterträgers 6 modifiziert ausgebildet sein. Während die Krafterzeugungseinrichtung 14 bei dem vorstehenden Ausführungsbeispiel lediglich aus einem entsprechenden Stellmotor besteht, können die Funktionen der Positionierung und der Krafterzeugung auch auf zwei kraftübertragungsmäßig in Reihe geschaltete Baugruppen aufgeteilt sein. Es ist dann zwischen einem zur Positionierung dienenden Motor und dem Tasterträger 6 eine Federeinheit angeordnet, die eine gewünschte Kennlinie aufweist. Die Kennlinie (Drehmoment über Drehwinkel) verläuft in unmittelbarer Nachbarschaft des Nullpunkts sprungartig steil, d.h. erst nach Überwindung einer maximalen Auslenkungskraft kann der Tasterträger 6 gegen die Position des Motors verdreht werden. Der weiteren Drehung setzt der Federmechanismus dann ein Drehmoment entgegen, das in der Regel kleiner als das zunächst zu überwindende Drehmoment ist. Damit überträgt der Federmechanismus zunächst unverfälscht jede Positionierbewegung und er erzeugt nach Auslenken aus dem Nullpunkt heraus die gewünschte Tastkraft.

Bei den nachstehend beschriebenen Ausführungsformen unterscheiden sich die Tastbetriebsarten des Kombitasters noch erheblicher. Beispielsweise ist die Tasteinrichtung 3, wie in Figur 2 in Verbindung mit Figur 3 angedeutet ist, nicht als starre Tasteinrichtung sondern als Tasteinrichtung mit axial beweglichem Taststift 5 ausgebildet. Dieser ist beispielsweise an zwei Membranen oder Federn 18, 19 axial beweglich gelagert. Zwischen den Federn 18, 19 ist ein induktiver Wegmesstaster 21 angeordnet, der die Axialposition des Taststifts 5 in ein elektrisches Ausgangssignal umsetzt. Die Federn 18, 19 dienen sowohl zur Messkrafterzeugung als auch zur Führung des Taststifts 5.

Bei dieser Ausführungsform des Kombitasters 1 arbeitet die Tasteinrichtung 2 einachsig, denn die Tastkugeln 8, 9 können nur eine Schwenk- oder Drehbewegung um die Drehachse 12 ausführen. Die Tasteinrichtung 3 arbeitet hingegen zweiachsig, denn der Taststift 5 und die Tastkugel 11 können sowohl um die Drehachse 12 schwenken als auch eine Radialbewegung zu dieser in Längsrichtung des Taststifts 5 ausführen. Auf diese Weise können mit der Tasteinrichtung 3 Messaufgaben gelöst werden, bei denen das Werkstück mit rechtwinklig zu der Werkstückoberfläche stehendem Taststift 5 angetastet werden muss.

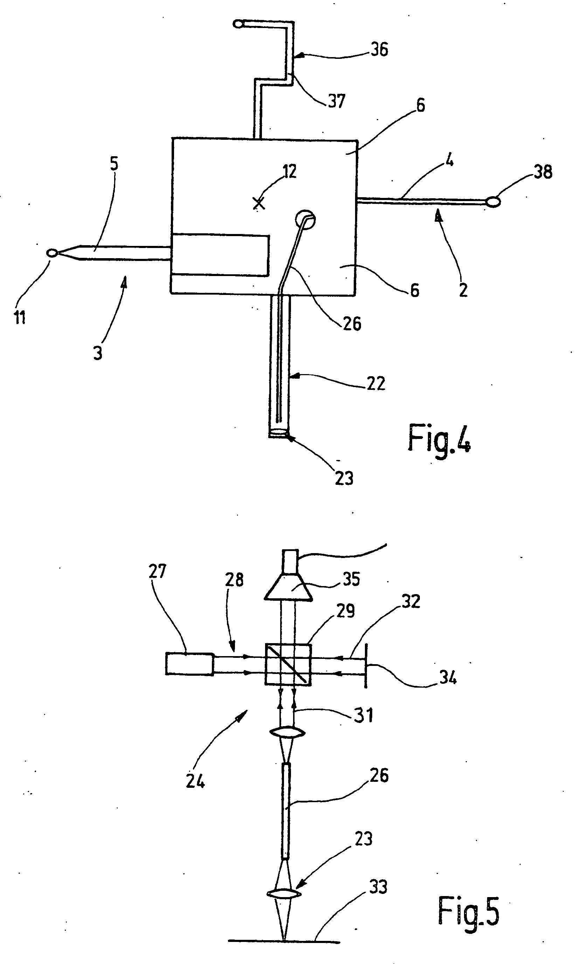

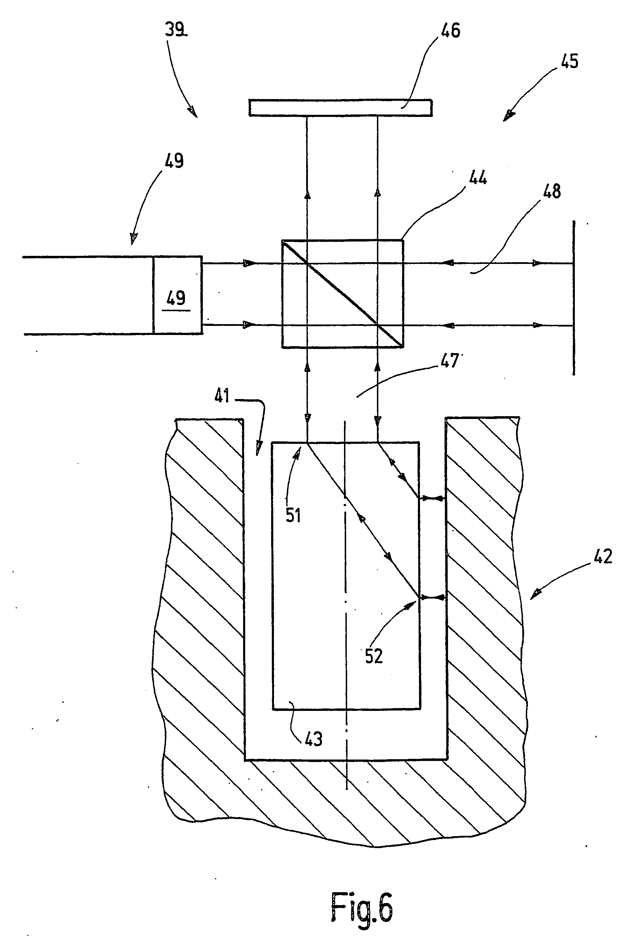

An Stelle der Tasteinrichtung 2 oder ergänzend zu dieser kann, wie Figur 4 veranschaulicht, an dem Tasterträger 6 eine optische Tasteinrichtung 22 gehalten sein. In dem veranschaulichten Beispiel handelt es sich dabei um einen optischen Punktsensor. Dieser enthält ein Objektiv 23, das sich an einem dünnem Stift wie ein Taststift von dem Tasterträger 6 weg erstreckt. Das Objektiv 23 gehört zu einem optischen Sensor 24, dessen Strahlengang schematisch in Figur 5 veranschaulicht ist und der vorzugsweise an einem Grundträger 25 gelagert ist, der auch den Antrieb 14 nebst Lagereinrichtung und Sensoreinrichtung 15 trägt. Die Verbindung zwischen dem ruhenden Teil des Sensors 24 und dem an dem Tasterträger 6 befindlichen Objektiv 23 wird über einen Lichtleiter 26 beispielsweise in Form einer Lichtleitfaser oder eines Lichtleitfaserbündels hergestellt. Alternativ können Spiegelstrecken zum Einsatz kommen. Zu dem Sensor 24 nach Figur 5 gehört eine Laserlichtquelle 27, die einen ausgesandten Lichtstrahl 28 zu einem Strahlteiler 29 schickt. Dieser spaltet den Lichtstrahl 28 in einen Messstrahl 31 und in einen Referenzstrahl 32 auf. Nach Reflexion durch die Werkstückoberfläche 33 bzw. einen Spiegel 34 werden der Referenzstrahl 32 und der Messstrahl 31 wieder vereinigt und interferierend zu einer Sensorzelle 35 geschickt. Dies kann eine Einzelsensorzelle sowie alternativ und vorzugsweise eine Minikamera sein. Die Auswertung des hier entstandenen und erfassten Interferenzbildes ermöglicht die Feststellung des Abstands der Werkstückoberfläche 33 von dem Sensor 24 bzw. dem Objektiv 23.

Ein solcher Kombitaster kann, wie Figur 4 veranschaulicht, zusätzlich zu den Tasteinrichtungen 2, 3 noch eine weitere mechanische Tasteinrichtung 36 mit einem beispielsweise gekröpften Taststift 37 aufweisen, der vorzugsweise starr an dem Tasterträger 6 gelagert ist. Ein solcher Kombitaster gestattet dann den taktilen Betrieb in drei unterschiedlichen Betriebsarten und zusätzlich den Betrieb in einer optischen Tastbetriebsart. Im Einzelnen erfolgt dies folgendermaßen:

Zur Lösung von Tastaufgaben, die ein rechtwinkliges Antasten der Werkstückoberfläche erfordern, wird der Tasterträger 6 mittels des Antriebs 14 so gedreht, dass der Taststift 5 rechtwinklig zu der zu vermessenden Oberfläche positioniert ist. Sodann wird der Kombitaster 1 im Ganzen an die Werkstückoberfläche herangefahren, um einen Messpunkt aufzunehmen. Das Messsignal ergibt sich aus dem Signal des induktiven Wegmesstasters 21. Die Tastkraft wird von den Federn 18, 19 erzeugt.

Zur Lösung einer mechanischen Tastaufgabe, die mit der Tasteinrichtung 2 durchgeführt werden kann, wird der Kombitaster im Ganzen so in die Nähe des Werkstücks verfahren, dass die Werkstückoberfläche im Schwenkbereich eines an dem Taststift 4 gehaltenen Tastkörpers 38 liegt. Durch entsprechende Ansteuerung des Antriebs 14 wird der Tasterträger 6 mit dem Taststift 4 jedoch so verschwenkt, dass der Tastkörper 38 die Werkstückoberfläche zunächst nicht berührt. Zur Abtastung der Oberfläche wird der Antrieb 14 nun so angesteuert, dass der Tasterträger 6 mit dem Taststift 4 verschwenkt bis die Tasteinrichtung 36 an der Werkstückoberfläche anliegt. Es kann nun durch entsprechende Bestromung des Antriebs 14 eine gewünschte Tastkraft erzeugt und bedarfsweise auch variiert werden. Damit lassen sich auch Oberflächennachgiebigkeiten z. B. an Folien erfassen. Die Koordinaten des Tastpunkts werden aus den Signalen der Sensoreinrichtung 15 bestimmt.

Eine weitere mechanische Tastaufgabe kann erfordern, an schwer zugänglichen Stellen, beispielsweise hinter Vorsprüngen, Antastungen vorzunehmen. Dies kann beispielsweise mit der Tasteinrichtung 36, ähnlich wie zuvor im Zusammenhang mit der Tasteinrichtung 2 beschrieben, durchgeführt werden.

In einer abgewandelten Ausführungsform weist der Kombitaster 1 an Stelle der optischen, zur punktweisen Abtastung dienenden Tasteinrichtung 22 eine zur Linienabtastung geeignete Tasteinrichtung 39 auf. Diese ist schematisch in Figur 6 veranschaulicht. Sie dient beispielsweise zur linienhaften Abtastung von Bohrungswandungen, wobei sie jedoch auch zur Abtastung anderer Oberflächenstrukturen eingerichtet sein kann. Figur 6 veranschaulicht eine Bohrung 41 in einem Werkstück 42, in die eine Interferenzgitterplatte 43 eingefahren werden kann. Die Interferenzgitterplatte 43 ist beispielsweise an einem Stift gehalten, der seinerseits von dem Tasterträger 6 getragen wird. Die optischen Ankopplung an einen Strahlteiler 44 eines Interferometers 45, das auf dem Grundträger 25 angeordnet sein kann, erfolgt, ähnlich wie in Figur 5 veranschaulicht, beispielsweise über einen Lichtleiter 26. Eine Sensorzeile 46 dient zur Erfassung eines Interferenzmusters, das durch Überlagerung des Messstrahls 47 mit dem Referenzstrahl 48 erzeugt worden ist. Ein Laser 49 speist das Interferometer 45 mit kohärentem Licht. Die Interferenzgitterplatte 43 weist an ihrer Lichteintrittskante 51 und an ihrer oberflächenseitigen Lichtaustritts- und -eintrittskante 52 eine Gitterlinienstruktur auf, die den Lichtstrahl zu der Werkstückoberfläche hin beugt. Abweichungen der Werkstückoberfläche von der idealen Geraden treten in dem von der Sensorzeile 36 erfassten Interferenzlinienbild in Erscheinung. Wegen der genauen Funktion wird auf den Stand der Technik gemäß DE 198 11 460 C2 verwiesen.

Soll ein Werkstück mit dem Kombitaster 1 vermessen werden, dessen Tasterträger 6 einen Punkttaster entsprechend der Tasteinrichtung 2, 3, 36 oder 22 sowie einen Linientaster gemäß der Bauart der Tasteinrichtung 39 enthält, kann die jeweilige Tasteinrichtung 2, 3, 22, 36, 39 durch entsprechendes Drehen des Tasterträgers 6 jeweils in Aktivposition überführt werden. Für Tasteinrichtungen gemäß der Bauart der Tasteinrichtungen 2, 36 erzeugt der Antrieb 14 die Tastkraft. Für Taster der Bauart der Tasteinrichtungen 3, 22, 39 dient der Antrieb 14 nur der ortsfesten Positionierung der jeweiligen Tasteinrichtung in Arbeitsposition. Je nach Messaufgabe kann ein Werkstück somit punktuell berührend, punktuell berührungslos oder in einem einzigen Messvorgang auf einer ganzen Linie erfasst werden. Wird der Kombitaster parallel oder quer zu der Drehachse 12 über die Werkstückoberfläche bewegt, kann der Linientaster gemäß der Bauart der Tasteinrichtung 39 einen Flächenausschnitt der Oberfläche des Werkstücks 42 lückenlos erfassen. Die von dem Linientaster abgetastete Linie auf der Werkstückoberfläche kann sowohl parallel als radial als auch quer zu der Drehachse 12 orientiert sein.

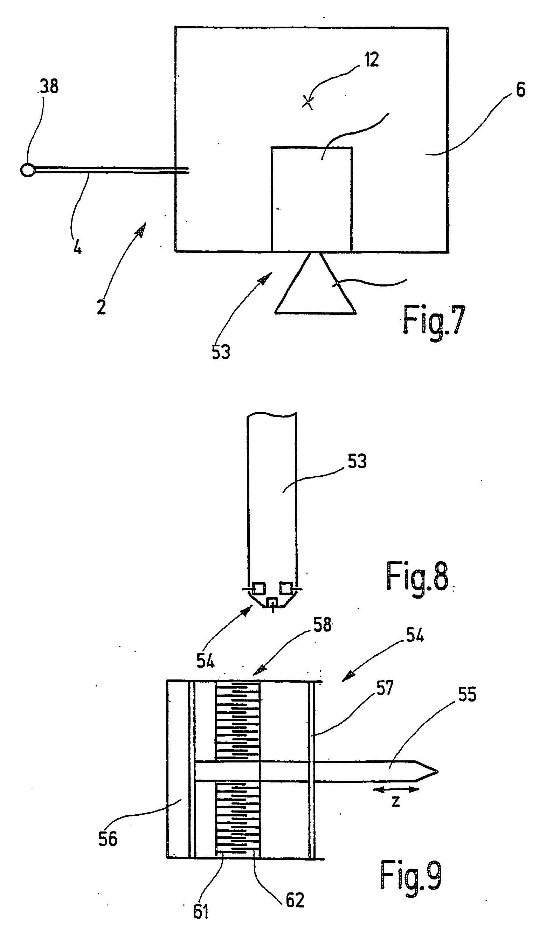

Wie Figur 7 veranschaulicht, kann auf dem Tasterträger 6 an Stelle eines punktuellen oder linienhaft arbeitenden optischen Tasters auch ein Flächentaster, beispielsweise in Form einer Mikrokamera 53 angeordnet sein, deren Blickrichtung beispielsweise radial zu der Drehachse 12 ausgerichtet ist. Zusätzlich kann der Tasterträger 6 die Tasteinrichtung 2 mit ihrem Taststift 4 und ihrem Tastkörper 36 tragen. Somit sind punktuelle mechanische Antastungen und flächenhafte optische Abtastungen möglich.

Als Tasteinrichtung eignet sich für den Tasterträger 6 auch ein einzelner oder eine Gruppe von an einem Trägerstift 53 gehaltenen so genannten Atomic-Force-Sensoren 54 (ATF-Sensoren), die zur an sich berührungslosen mechanischen Abtastung von Oberflächen dienen. Der ATF-Sensor 54 ist in Figur 9 drastisch vergrößert und schematisiert veranschaulicht. Er enthält eine Mikronadel 55, die in einer Richtung Z beweglich gelagert ist. Sie kann dazu an entsprechenden elastischen Strukturen, beispielsweise Mikrofedern 56, 57, aufgehängt sein. Der Mikronadel 55 sind ein vorzugsweise aber mehrere elektrostatische Antriebs- und Sensoreinrichtungen 58 zugeordnet. Diese beinhalten beispielsweise aus einkristallinem Silizium hergestellte Kammstrukturen, deren einzelnen Kämme 61, 62 einander mit ihren Zinken nicht berührend ineinander greifen. Der Kamm 61 ist ortsfest gelagert während der Kamm 62 mit der Mikronadel 55 verbunden ist. Wird eine Spannung zwischen beiden Kämmen 61, 62 angelegt hat dies eine auf die Mikronadel 55 einwirkende Kraft zur Folge. Die Verlagerung der Mikronadel 55 wird wiederum als Kapazitätsänderung zwischen den Kämmen 61, 62 registriert. Nähert sich die Spitze der Mikronadel 55 an eine Werkstückoberfläche an kann es zwischen der Spitze und der Werkstückoberfläche zu Adhesionskräften kommen bevor eine eigentliche Materialberührung statt findet. Diese Mikrokräfte haben eine Axialbewegung der Mikronadel 55 zur Folge, die wiederum durch Kapazitätsänderung an den Kämmen 61, 62 erfasst werden kann.

Weitere alternative Sensoren in Form induktiver oder kapazitiver Näherungssensoren sind einsetzbar. Es wird au-ßerdem darauf hingewiesen, dass auch mehrere Tasteinrichtungen miteinander vereinigt sein können. Beispielsweise können ATF-Sensoren oder optische Sensoren auch von Taststiften gehalten werden, die bereits mit mechanischen Tastelementen, wie Tastkugeln oder dergleichen, versehen sind. Damit werden verschiedene Tastbetriebsarten an ein und demselben Taststift vereinigt.

Der erfindungsgemäße Kombitaster 1 weist einen Tasterträger 6 auf, der über eine Krafterzeugungseinrichtung (Antrieb 14) durch Drehung um eine Drehachse 12 in verschiedene Positionen überführbar und mit einer vorgegebenen Kraft bzw. einem vorgegebenen Drehmoment beaufschlagbar ist. Eine Sensoreinrichtung 15 erfasst die Drehposition des Tasterträgers 6. An diesem sind unterschiedliche Tasteinrichtungen 2, 3 gelagert, um unterschiedliche Messaufgaben in unterschiedlichen Tastbetriebsarten zu ermöglichen. Beispielsweise können die Tasteinrichtungen 2, 3 unterschiedliche mechanische Taster sein. Alternativ oder zusätzlich können optische oder sonstige nicht berührende Tasteinrichtungen 22, 39 an dem Tasterträger 6 angeordnet werden, um weitere Tastaufgaben zu lösen.

## Patentansprüche

1. Kombitastkopf (1)
mit einem Grundträger (25),
mit einem Tasterträger (6), der an dem Grundträger (25) beweglich gelagert ist,
mit einer Messeinrichtung (15) zur Erfassung der Position des Tasterträgers (6) in Bezug auf den Grundträger (25),
mit einer Krafterzeugungs- und Positioniereinrichtung (14), die mit dem Tasterträger (6) verbunden ist, um diesem mit einem Drehmoment oder einer Kraft zu beaufschlagen,
mit einer ersten Tasteinrichtung (2), die an dem Tasterträger (6) starr gelagert ist, für eine erste Tastbetriebsart, in der die Messeinrichtung (15) eine von der Tasteinrichtung (2) verursachte Auslenkung des Tasterträgers (6) und somit die Position der Tasteinrichtung (2) kennzeichnet, und
mit einer zweiten Tasteinrichtung (3, 22, 36, 39), die an dem Tasterträger (6) gelagert ist, für eine von der ersten Tastbetriebsart verschiedene zweite Tastbetriebsart, bei der der Tasterträger (6) in Bezug auf den Grundträger (25) ruhend gehalten ist.

2. Kombitastkopf (1) nach Anspruch 1, **dadurch gekennzeichnet**
**dass** die erste Tasteinrichtung (2) in einer ersten Position des Tasterträgers (6) in Arbeitsposition steht, während die zweite Tasteinrichtung (3,22,36,39) in Ruheposition steht, und
**dass** die zweite Tasteinrichtung (3,22,36,39) in der zweiten Position des Tasterträgers (6) in Arbeitsposition steht, während die erste Tasteinrichtung (2) in Ruheposition steht.

3. Kombitastkopf nach Anspruch 1 oder 2,
dass die erste Tasteinrichtung (2) durch einen ersten Taststift (4) gebildet ist, der an dem Tasterträger (6) starr gelagert ist und an seinem Ende wenigstens einen Tastkörper (8, 9) trägt.

4. Kombitastkopf nach Anspruch 1 oder 2, **dadurch gekennzeichnet, dass** die zweite Tasteinrichtung (3) durch einen ersten, an seinem Ende mit einem Tastkörper (11) versehenen Taststift (5) gebildet ist, der an dem Tasterträger (6) beweglich gelagert und mit einer Messkrafterzeugungseinrichtung (18, 19) sowie einem Messsystem (21) versehen ist, das seine Auslenkung gegen den Tasterträger (6) erfasst und in elektrische Signal umsetzt.

5. Kombitastkopf nach Anspruch 4, **dadurch gekennzeichnet, dass** die Messkrafterzeugungseinrichtung (18, 19) eine Federeinrichtung ist.

6. Kombitastkopf nach Anspruch 4, **dadurch gekennzeichnet, dass** die zweite Tasteinrichtung (3) an dem Tasterträger (6) axial verschiebbar gelagert ist.

7. Kombitastkopf nach Anspruch 4, **dadurch gekennzeichnet, dass** die zweite Tasteinrichtung (36) durch einen zweiten Taststift (37) gebildet ist, der an dem Tasterträger (6) starr gelagert ist und an seinem Ende einen Tastkörper trägt.

8. Kombitastkopf nach Anspruch 7, **dadurch gekennzeichnet, dass** der erste Taststift (5) und der zweiten Taststift (37) unterschiedliche Tastkörper tragen.

9. Kombitastkopf nach Anspruch 7, **dadurch gekennzeichnet, dass** der erste Taststift (5) gerade und der zweite Taststift (37) gekröpft ausgebildet ist.

10. Kombitastkopf nach einem der Ansprüche 1 bis 3, **dadurch gekennzeichnet, dass** die erste Tasteinrichtung (2) eine taktile Tasteinrichtung und die zweite Tasteinrichtung (39) eine nichttaktile Tasteinrichtung ist.

11. Kombitastkopf nach Anspruch 10, **dadurch gekennzeichnet, dass** die zweite Tasteinrichtung (39) eine optische Tasteinrichtung ist.

12. Kombitastkopf nach Anspruch 11, **dadurch gekennzeichnet, dass** die zweite Tasteinrichtung (39) ein interferenzoptischer Sensor ist.

13. Kombitastkopf nach Anspruch 11 oder 12, **dadurch gekennzeichnet, dass** die zweite Tasteinrichtung (39) ein Liniensensor ist.

14. Kombitastkopf nach Anspruch 11, **dadurch gekennzeichnet, dass** die zweite Tasteinrichtung ein Flächensensor (53) ist.

15. Kombitastkopf nach Anspruch 10, **dadurch gekennzeichnet, dass** die zweite Tasteinrichtung ein induktiver Näherungssensor ist.

16. Kombitastkopf nach Anspruch 10, **dadurch gekennzeichnet, dass** die zweite Tasteinrichtung ein kapazitiver Näherungssensor ist.

17. Kombitastkopf nach Anspruch 1 oder 2, **dadurch gekennzeichnet, dass** die zweite Tasteinrichtung Atomwechselkraftsensor (54) ist.

## Claims

1. Multipurpose contact probe (1)
with a base support (25)
with a probe support (6), which is movably disposed on the base support (25), with a measuring device (15) for detecting the position of the probe support (6) in relation to the base support (25),
with a force generating and positioning device (14), which is connected to the probe support (6) in order to act on this with a torque or a force,
with a first sensing device (2), which is rigidly disposed on the probe support (6), for a first sensing mode, in which the measuring device (15) identifies a deflection of the probe support (6) caused by the sensing device (2) and thus identifies the position of the sensing device (2), and
with a second sensing device (3, 22, 36, 39), which is disposed on the probe support (6), for a second sensing mode which is different from the first sensing mode and in which the probe support (6) is held at rest in relation to the base support (25).

2. Multipurpose contact probe (1) according to claim 1, **characterised in that** in a first position of the probe support (6) the first sensing device (2) stands in the operating position, whereas the second sensing device (3, 22, 36, 39) stands in the resting position, and that in the second position of the probe support (6) the second sensing device (3, 22, 36, 39) stands in the operating position, whereas the first sensing device (2) stands in the resting position.

3. Multipurpose contact probe (1) according to claim 1 or 2, **characterised in that** the first sensing device (2) is formed by a first contact stylus (4), which is rigidly disposed on the probe support (6) and bears at least one sensing body (8, 9) at its end.

4. Multipurpose contact probe (1) according to claim 1 or 2, **characterised in that** the second sensing device (3) is formed by a first contact stylus (5), which is provided with a sensing body (11) at its end, is movably disposed on the probe support (6) and is provided with a measurement force generating device (18, 19) as well as a measurement system (21), which detects its deflection relative to the probe support (6) and converts it into electric signals.

5. Multipurpose contact probe according to claim 4, **characterised in that** the measurement force generating device (18, 19) is a spring means.

6. Multipurpose contact probe according to claim 4, **characterised in that** the second sensing device (3) is disposed to be axially displaceable on the probe support (6).

7. Multipurpose contact probe according to claim 4, **characterised in that** the second sensing device (36) is formed by a second contact stylus (37), which is rigidly disposed on the probe support (6) and bears a sensing body on its end.

8. Multipurpose contact probe according to claim 7, **characterised in that** the first contact stylus (5) and the second contact stylus (37) bear different sensing bodies.

9. Multipurpose contact probe according to claim 7, **characterised in that** the first contact stylus (5) is straight and the second contact stylus (37) is bent at right angles.

10. Multipurpose contact probe according to one of claims 1 to 3, **characterised in that** the first sensing device (2) is a tactile sensing device and the second sensing device (39) is a non-tactile sensing device.

11. Multipurpose contact probe according to claim 10, **characterised in that** the second sensing device (39) is an optical sensing device.

12. Multipurpose contact probe according to claim 11, **characterised in that** the second sensing device (39) is an interference-optical sensor.

13. Multipurpose contact probe according to claim 11 or 12; **characterised in that** the second sensing device (39) is a line sensor.

14. Multipurpose contact probe according to claim 11, **characterised in that** the second sensing device is a surface sensor (53).

15. Multipurpose contact probe according to claim 10, **characterised in that** the second sensing device is an inductive proximity sensor.

16. Multipurpose contact probe according to claim 10, **characterised in that** the second sensing device is a capacitive proximity sensor.

17. Multipurpose contact probe according to claim 1 or 2, **characterised in that** the second sensing device is an atomic force sensor (54).

## Revendications

1. Tête de palpage combinée (1), comprenant
- un support de base (25),
- un support de palpeur (6) qui est monté mobile sur le support de base (25),
- un dispositif de mesure (15) destiné à détecter la position du support de palpeur (6) par rapport au support de base (25),
- un dispositif de production de force et de positionnement (14) qui est relié au support de palpeur (6) aux fins d'appliquer un couple ou une force à celui-ci,
- un premier dispositif de palpage (2) qui est monté de façon rigide sur le support de palpeur (6) pour fonctionner dans un premier mode de palpage dans lequel le dispositif de mesure (15) marque une déviation du support de palpeur (6) provoquée par le dispositif de palpage (2) et donc la position du dispositif de palpage (2), et
- un deuxième dispositif de palpage (3, 22, 36, 39) qui est monté sur le support de palpeur (6) pour fonctionner dans un deuxième mode de palpage qui est différent du premier mode de palpage et dans lequel le support de palpeur (6) est maintenu au repos par rapport au support de base (25).

2. Tête de palpage combinée (1) selon la revendication 1, **caractérisée**
**par le fait que** le premier dispositif de palpage (2) est en position de travail lorsque le support de palpeur (6) occupe une première position, tandis que le deuxième dispositif de palpage (3, 22, 36, 39) est en position de repos, et
**par le fait que** le deuxième dispositif de palpage (3, 22, 36, 39) est en position de travail lorsque le support de palpeur (6) occupe une deuxième position, tandis que le premier dispositif de palpage (2) est en position de repos.

3. Tête de palpage combinée selon la revendication 1 ou 2, **caractérisée par le fait que** le premier dispositif de palpage (2) est constitué d'une première tige de palpage (4) qui est montée de façon rigide sur le support de palpeur (6) et porte au moins un élément palpeur (8, 9) à son extrémité.

4. Tête de palpage combinée selon la revendication 1 ou 2, **caractérisée par le fait que** le deuxième dispositif de palpage (3) est constitué d'une première tige de palpage (5), dont l'extrémité est pourvue d'un élément palpeur (11) et qui est montée mobile sur le support de palpeur (6) et est dotée d'un dispositif de production de force de mesure (18, 19) ainsi que d'un système de mesure (21) qui détecte la déviation de la tige par rapport au support de palpeur (6) et la convertit en signaux électriques.

5. Tête de palpage combinée selon la revendication 4, **caractérisée par le fait que** le dispositif de production de force de mesure (18, 19) est un dispositif à ressort.

6. Tête de palpage combinée selon la revendication 4, **caractérisée par le fait que** le deuxième dispositif de palpage (3) est monté sur le support de palpeur (6) avec possibilité de déplacement axial.

7. Tête de palpage combinée selon la revendication 4, **caractérisée par le fait que** le deuxième dispositif de palpage (36) est constitué d'une deuxième tige de palpage (37) qui est montée de façon rigide sur le support de palpeur (6) et porte un élément palpeur à son extrémité.

8. Tête de palpage combinée selon la revendication 7, **caractérisée par le fait que** la première tige de palpage (5) et la deuxième tige de palpage (37) portent des éléments palpeurs différents.

9. Tête de palpage combinée selon la revendication 7, **caractérisée par le fait que** la première tige de palpage (5) est rectiligne et la deuxième tige de palpage (37) présente une forme contrecoudée.

10. Tête de palpage combinée selon une des revendications 1 à 3, **caractérisée par le fait que** le premier dispositif de palpage (2) est de type tactile et le deuxième dispositif de palpage (39) est de type non tactile.

11. Tête de palpage combinée selon la revendication 10, **caractérisée par le fait que** le deuxième dispositif de palpage (39) est un dispositif optique.

12. Tête de palpage combinée selon la revendication 11, **caractérisée par le fait que** le deuxième dispositif de palpage (39) est un capteur à interférence optique.

13. Tête de palpage combinée selon la revendication 11 ou 12, **caractérisée par le fait que** le deuxième dispositif de palpage (39) est un capteur linéaire.

14. Tête de palpage combinée selon la revendication 11, **caractérisée par le fait que** le deuxième dispositif de palpage est un capteur plan (53).

15. Tête de palpage combinée selon la revendication 10, **caractérisée par le fait que** le deuxième dispositif de palpage est un détecteur de proximité inductif.

16. Tête de palpage combinée selon la revendication 10, **caractérisée par le fait que** le deuxième dispositif de palpage est un détecteur de proximité capacitif.

17. Tête de palpage combinée selon la revendication 1 ou 2, **caractérisée par le fait que** le deuxième dispositif de palpage est un capteur de force atomique alternative (54).
